# EUROPEAN PATENT APPLICATION

(11) **EP 4 693 085 A1**
(43) Date of publication of application: **11.02.2026**
(21) Application number: 24306329.4
(22) Date of filing: 06.08.2024
(51) Int. Cl.: G06F 21/57, H04L 9/40, G06F 8/65

(54) **CONDITIONAL PATCH EXECUTION ON A SECURE ELEMENT**

(71) Applicant: THALES DIS FRANCE SAS, 92190 Meudon (FR)
(72) Inventor: AHMAD, Syarif, Batam 29461 (ID); SADAGOPAN, Sridharan, Singapore 68027 (SG); MAUNIER, Gérald, 83110 Sanary-sur-Mer (FR); FALCOU, Cyrille, 13400 Aubagne (FR); BORD, Anthony, 13710 Fuveau (FR)
(74) Representative: Quintero Romero, Manuel

(57) **Abstract**

The invention provides a method of executing a patch on a secure element, the method being implemented by at least one terminal on a site and comprising the following operations:
- obtaining (202) a patch package comprising a patch and patch execution information;
- obtaining (201) environment information related to the site;
- after establishing (205) a communication channel with the secure element, taking a decision (206) to execute or not the patch comprised in the patch package, on the secure element, the decision depending on the environment information and the patch execution information;
- executing (207) the patch on the secure element if the decision indicates to execute the patch.

## Description

### TECHNICAL FIELD

This invention is related to the field of executing a patch on a secure element, in particular during establishment of a communication channel between the secure element.

The invention is useful in particular, but not exclusively, in the context of sites equipped with at least one terminal in charge of checking secure elements of users for security purposes, such as airports equipped with kiosks for example.

### BACKGROUND OF THE INVENTION

Nowadays, secure elements are integrating a secure processor and a secure memory for storage of sensitive data, such as personal attributes or banking information. A secure software, executed by the secure processor, is configured to manage the personal or banking information, in particular to decide to communicate or not some of these information to external entities.

This is the case of electronic passports, of electronic identity cards or of secure elements that are integrated or embedded in user devices such as Smartphones for example.

Because the secure software of the secure element may face some security issues, patches can be developed by a manufacturer of the secure software and such patches need to be executed on the secure elements of users, to overcome the security issues.

To execute the patch on several secure elements, terminals that are configured to communicate with secure elements for providing a service or for granting an access to a place or a resource (such as kiosks in airports for example), may be used. This enables to execute the patches without the need for the user to actively search for, retrieve and install the patch on their secure element.

However, when executing a patch on a secure element, the terminal delays the provision of the service, or the access or resource grant to the user. This may raise issues for the user and for other users in some contexts, such as long waiting queues of users waiting to use a terminal executing the patch for example.

There is therefore a need to execute patches on a secure elements of a user, while limiting the negative impact for the user, in particular the impact created by the delay associated with the execution of the patch on the secure element.

The invention aims at improving the situation.

### SUMMARY OF THE INVENTION

The present invention provides a solution for the aforementioned problems by a method of executing a patch on a secure element according to claim 1, a terminal according to claim 14, and a system according to claim 15. In dependent claims, preferred embodiments of the invention are defined.

A first aspect of the invention concerns a method of executing a patch on a secure element, the method being implemented by at least one terminal on a site and comprising the following operations:
- obtaining a patch package comprising a patch and patch execution information;
- obtaining environment information related to the site;
- after establishing a communication channel with a secure element, taking a decision to execute or not the patch comprised in the patch package, on the secure element, the decision depending on the environment information and the patch execution information;
- executing the patch on the secure element if the decision indicates to execute the patch.

Therefore, the execution of the patch on the secure element of a user depends on the environment information, which may comprise dynamic contextual information, and on patch execution information, which can comprise information related to the execution of the patch. This enables to take an execution decision that is based on the impact the patch execution can have on the user or on other users.

According to some embodiments, the decision may be taken by applying at least one predefined rule, with at least one predefined condition defining input parameters including environment information and patch execution information, and defining an output decision based on the input parameters, the output decision indicating the execute or not the patch.

This allows to anticipate situations in which the patch can be executed and situation in which is it preferable to postpone the execution of the patch. In addition, applying one or several rules enables to simplify the decision process, which is therefore quick and requires few computational resources.

According to some embodiments, the environment information may comprise one or several of the following information:
- information related to a queue of people waiting to use the terminal;
- information regarding time schedule related to the site;
- information regarding availability of other terminals of the site.

These pieces of information are relevant for deciding to execute or not the patch on the secure element, as it is representative of the context in which the patch can be executed, thereby allowing to evaluate the impact of the execution of the patch.

According to some embodiments, the patch execution information may comprise one or several of the following information:
- a number of patch steps to be executed to execute the patch; and/or
- at least one estimated duration associated with an execution of the patch; and/or
- an urgency level associated with the execution of the patch.

These pieces of information are relevant for deciding to execute or not the patch on the secure element, as it enables to evaluate a trade-off between the urgency of the patch and its impact on the user and other users.

In complement, the at least one estimated duration may comprise an estimated patch duration associated with the execution of a complete patch and/or at least one estimated step duration respectively associated with execution of at least one patch step, the complete patch comprising several patch steps.

This enables to anticipate the duration of the execution of the complete patch or of some of the patch steps of the complete patch, which improves the decision to execute or not the patch (which may be the complete patch, or a partial patch comprising one or several patch steps of the complete patch) on the secure element.

According to some embodiments, the patch package may comprise a first file and a second file, the first file comprising binary data of the patch and the second file comprising at least the patch execution information.

This facilitates the obtention of the patch execution information by the terminal, which may be explicitly indicated in the patch package. The decision to execute or not the patch is therefore quick and involves few computational resources for the terminal.

In complement, the second file may comprise a metadata section and a patch step section.

The patch step section may comprise information descriptive of the several patch steps of the complete patch, which enables the terminal to execute some of the patch steps of the complete patch, if requested by a terminal controller. This allows to split the execution of the complete patch between different terminals of the site, which reduces the execution time in each of the terminals.

Still in complement, the metadata section may comprise the estimated patch duration and/or the urgency level.

These relevant patch execution informations are therefore explicitly indicated in the metadata section. The decision to execute or not the patch is therefore quick and involves few computational resources for the terminal.

Alternatively or in complement, the metadata section may comprise a signature of an issuer of the patch or of a manufacturer of the patch.

This enables the terminal, or a terminal controller transmitting the patch package to the terminal, to verify the signature before executing the patch, which improves the security associated with the patch execution.

According to a first embodiment, the obtained patch package based on which the decision is taken may be a complete patch package comprising a complete patch, the complete patch package may be obtained from an issuer of the complete patch package and the terminal may be a unique terminal of the site.

The unique terminal is therefore able to execute a full version of the patch (the complete patch) on secure elements of users.

Alternatively, according to a second embodiment, the site may comprise several terminals, the terminal controller of the site may receive a complete patch package from an issuer entity, the complete patch package comprising a complete patch, and may transmit the complete patch package to the terminals of the site, and, for each of the terminals, the complete patch package may be the obtained pack package based on which the decision is taken.

Therefore, each of the terminals of the site is able to execute the full version of the patch on secure elements of different users. The terminal controller can therefore transmit the complete patch package to the different terminals of the site.

Sill alternatively, according to a third embodiment, the site may comprise several terminals and a terminal controller of the site may perform the following operations:
- receiving a complete patch package from an issuer of the patch, comprising a complete patch associated with a plurality of patch steps;
- generating at least two partial patch packages comprising a first partial patch package and a second partial patch package, the first partial patch package comprising a first partial patch associated with at least one first patch step of the complete patch, and the second partial patch package comprising a second partial patch associated with at least one second patch step of the complete patch, the at least one second patch step being distinct from the at least one first patch step, wherein the at least two partial patch packages are complementary, so that upon sequential execution of the at least two partial patches, the complete patch is executed;
- transmitting, to each terminal of the site, the partial patch package generated for said terminal.

For each terminal of the site, the obtained patch package based on which the decision is taken may be the partial patch package received from the terminal controller.

The third embodiment enables to split the complete pack package in several partial pack packages, thereby reducing the execution time at each of the terminal executing a part (one or some patch steps) of the complete patch.

In complement, in the third embodiment, the terminal controller may receive the environment information related to the site, may extract the patch execution information from the complete patch package, and may generate the at least two partial patch packages based on the received environment information and the patch execution information.

This enables to adapt the fragmentation of the complete patch package in several partial patch packages to the context (the environment information) and to the patch execution information. The execution times are therefore optimized between the different terminals executing different parts of the complete patch.

A second aspect of the invention concerns a computer program comprising instructions arranged for implementing the method according to the first aspect of the invention, when said instructions are executed by a processor.

A third aspect of the invention concerns a terminal comprising a first interface configured for obtaining a patch package comprising a patch and patch execution information;
the terminal being configured for obtaining environment information related to a site in which the terminal is located;
the terminal comprising a second interface for establishing a communication channel with a secure element, and a processor configured for
   - after establishing the communication channel with the secure element, taking a decision to execute or not the patch comprised in the patch package, on the secure element, the decision depending on the environment information and on the patch execution information;
   - executing the patch on the secure element, via the second interface, if the decision indicates to execute the patch.

A fourth aspect of the invention concerns a system comprising at least one terminal according to the third aspect of the invention, and a terminal controller, wherein the terminal controller is configured for receiving a complete patch package and to transmit the complete patch package or a partial patch package derived from the complete patch package, to the at least one terminal. For each terminal of the at least one terminal, the obtained patch package is the complete patch package or the partial patch package received from the terminal controller.

All the features described in this specification (including the claims, description, and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Figure 1: This figure shows a system for implementing a method for executing a patch on a secure element, according to some embodiments of the invention.
- Figure 2: This figure illustrates the steps of a method for executing a patch on a secure element, according to some embodiments of the invention, according to first, second and third embodiments of the invention.
- Figure 3: This figure illustrates additional preliminary steps of a method for executing a patch on a secure element, according to the third embodiment of the invention.
- Figure 4: This figure illustrates the structure of a terminal according to some embodiments of the invention.
- Figure 5: This figure illustrates the structure of a terminal controller according to some embodiments of the invention.

### DETAILED DESCRIPTION OF THE INVENTION

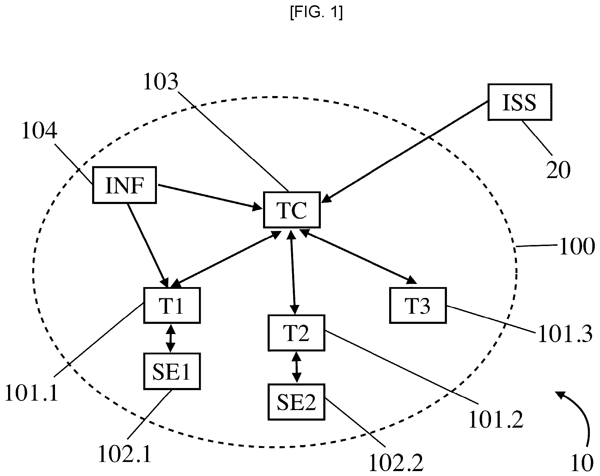

Figure 1 shows a system 10 for implementing a method of executing a patch on a secure element according to some embodiments of the invention.

The system 10 according to the invention comprises at least one terminal 101.1 located on a given site 100.

The terminal 101.1 encompasses any entity that is arranged to communicate with a secure element 102.1 so as to provide a service or to grant an access to a place or to a resource to the user based on information stored in the secure element 102.1. According to the invention, the terminal 101.1 is further configured for receiving a patch package, unpacking the patch package and executing a patch on the secure element 102.1 with which it communicates. To this end, a communication channel 110.1 can be established between the secure element 102.1 and the terminal 101.1.

The communication channel 110.1 can be a wireless channel, which can be based on Near Field Communication, NFC, for example. This allows a simple establishment of the communication channel 110.1 as the secure element 102.1 has merely to be placed near or in contact to an NFC interface of the terminal 101.1.

The secure element 102.1 encompasses any entity that is arranged to securely store and manage personal information or financial information related to a user of the secure element 102.1. To this end, the secure element 102.1 comprises a secure non volatile memory and a secure processor arranged to execute instructions of a secure software that is stored in memory. The secure software, once executed by the secure processor, is configured to manage the personal or financial information stored in the secure element 102.1, in particular to provide some of these information to external entities. Because the secure software may face some security issues, patches can be developed by a secure software manufacturer and can be transmitted to the terminal 101.1 to be executed on the secure element 102.1 once the communication channel 110.1 is established.

The secure element 102.1 may be integrated or embedded in a user device, such as a smartphone for example, or may be a document or card comprising the secure element 102.1, such as an electronic identity, elD, card or an electronic passport. If the secure element 102.1 is integrated or embedded in the user device, the secure non volatile memory and the secure processor may be separate from a main memory and a main processor of the user device.

According to a first embodiment of the invention, the invention is implemented in a single terminal 101.1 of a site 100. In the first embodiment, the terminal controller 103 described in what follows may be optional, and the terminal controller 103 may receive a complete patch package directly from an issuer entity 20 that is described in what follows.

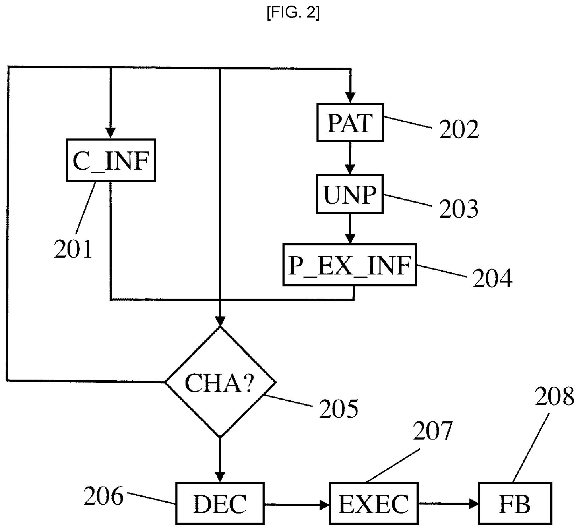

In other embodiments (including second and third embodiments described hereafter), the site 100 comprises several terminals managed by the terminal controller 103. In the example illustrated on figure 1, the site 100 comprises three terminals, including a first terminal 101.1 (the terminal 101.1 mentioned above), a second terminal 101.2 and a third terminal 101.3. The different embodiments of the invention are described in what follows referring to figure 2. In a second embodiment, the site 100 comprises several terminals, and a user only uses one of the terminals to establish a communication channel between their secure element and the terminal, to obtain a service provided by the terminal, or to obtain an access grant to a resource or place. This may be the case in a bank or in a security gate of a building comprising a unique control step for example. According to a third embodiment, the site 100 comprises several terminals, and a user is required to sequentially establish a communication channel between their secure element and several of these terminals. For example, the user having the first secure element 102.1 has to sequentially establish a communication channel with the first terminal 101.1, then with the second terminal 101.2 and then with the third terminal 101.3. This may be the case in an airport where the user has to go through several security checks, or in a building having several security checks to access different places in the building.

In the second and third embodiments, several secure elements of different users may be communicating with respective terminals of the site 100 at a given time. In the example shown on figure 1, a first secure element 102.1 communicates with the first terminal 101.1 via a first communication channel 110.1, and a second secure element 102.2 communicates with the second terminal 101.2 via a second communication channel 110.2.

The terminal controller 103 may therefore be arranged to receive a complete patch package from the issuer entity 20, and is in charge to transmit a patch package (the complete patch package or a partial patch package) to the at least one terminal 101.1-101.3 of the site 100. The terminal controller 103 can therefore be considered as a back-end server, whereas the terminals 101.1-101.3 are forming a front-end interface with the user.

The terminal controller 103 may also be in charge of verifying the integrity and/or origin of the complete patch package that it receives. For example, the complete patch package may be signed by the issuer entity 20 and may be received with a public certificate of the issuer 20. The terminal controller 103 can therefore check the signature of the complete patch package using the public key associated with the received public certificate, and may verify that the certificate is valid (using a root public key of a certificate authority). Alternatively, the signature is checked by the at least one terminal 101.1-101.3 after receiving the patch package from the terminal controller 103.

According to the invention, the complete patch package comprises patch execution information, that is information related to the execution of the patch. For example, the patch execution information may comprise:
- a number of patch steps to be executed to execute the complete patch; and/or
- at least one estimated duration associated with the execution of the patch. The at last one estimated duration may comprise an estimated patch duration associated with the execution of the complete patch and/or estimated step durations respectively associated with the executions of one or several patch steps of the patch, the one or several patch steps of the complete patch forming a partial patch. The at least one estimated duration can be expressed in milliseconds; and/or
- an urgency level associated with the execution of the patch. No restriction is attached to the way the urgency level is expressed: it can be a digit in a predetermined interval, such as 1, 2 and 3 for example, or a score.

The patch package that is transmitted to the at least one terminal 101.1-101.3 may comprise some or all of the patch execution information listed above. For example, when the patch package is a partial patch package associated with one or several patch steps, it may comprise the estimated step durations of the one or several patch steps of the partial patch package.

No restriction is attached to the structure or format of the complete patch package. For example, the complete patch package may be built, by the issuer entity 20, or by another entity communicating with the issuer entity 20 (such as an entity related to the secure software manufacturer), as follows:
- obtaining a binary file of the complete patch is obtained from the secure software manufacturer;
- obtaining metadata related to the complete patch;
- obtaining step data related to the at least one patch step of the complete patch;
- combining metadata and step data in a manifest file;
- generating a signature from the binary file and manifest file, based on a secret key of the issuer and/or secure device manufacturer;
- inserting the signature in the manifest file;
- grouping (zipping) the manifest file and the binary file to form the complete patch package.

The metadata may comprise some of the patch execution information mentioned above. More generally, the metadata may comprise one or several of the following information:
- an identifier of the complete patch;
- an identifier of the issuer associated with the issuer entity 20;
- an identifier of the secure software manufacturer;
- a target version timestamp;
- the estimated patch duration mentioned above;
- the urgency level mentioned above;
- a reporting endpoint, which is a network address, to which a report of the complete patch execution is to be sent. The network address can be an Uniform Resource Locator, URL, associated with the secure software manufacturer; and/or
- the generated signature.

Step data may comprise one or several of the following information:
- for each patch step of the complete patch, one or several commands;
- for each command, at least one address in the binary file associated with an action of the command, and a description of the at least one action;
- for each patch step of the complete patch, a description and/or an identifier of the patch step;
- an error handler referring to the binary file;
- a success handler referring to the binary file;
- for each patch step of the complete patch, the estimated patch duration mentioned above.

The manifest file also comprises an identifier of the binary file.

According to some embodiments, the manifest file is a JSON file, comprising three main tags, including "binaries" (the identifier of the binary file), metadata as listed above, and step data as listed above. As mentioned above, the signature is inserted in the metadata tag.

The use of a JSON format for the manifest file, zipped with the binary file to form the patch package, allows interoperability, as it can be used by different secure software manufacturers and/or issuers, which allows the terminal controller 103 and the at least one terminal 101.1-101.3, to extract and interpret the complete patch (or patch steps from the complete patch) from the complete patch package, in order to execute the complete patch or the partial patch.

In addition, the JSON format is lightweight and easily verified by the terminal controller 103 or the terminal 101.1-101.3.

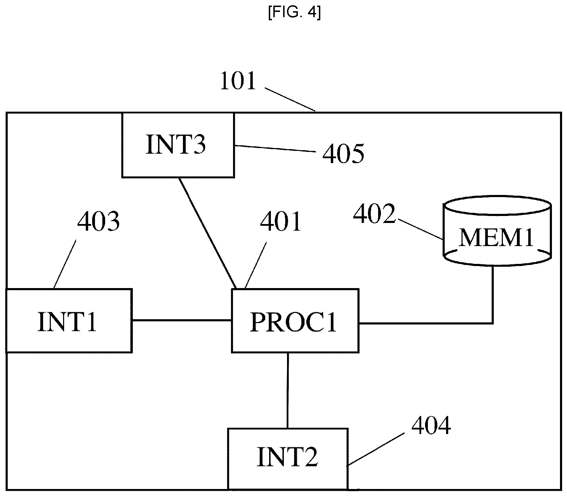

No restriction is attached to the terminal, or terminals, which can be a device, such as a kiosk, comprising a user interface (for example a touch panel) and an interface for communicating with secure elements, as it is described in what follows referring to figure 4.

According to the invention, the site 100 may further comprise at least one information entity 104 collecting environment information related to the site 100. The environment information may be related to the whole site 100, or to one or several of the terminals 101.1 to 101.3 in the second and third embodiments, or to the single terminal 101.1 in the first embodiment.

The environment information may comprise one or several of the following information:
- information regarding a queue of people waiting to use a given terminal 101.1-101.3. This information may indicate a number of people, or an estimated waiting time for the last person of the queue;
- information regarding time schedule, for example a closure hour of the site 100 or a flight schedule for one or several flights in case the site 100 is an airport;
- information regarding availability of the terminals the site 100, such as an availability state for each of the terminals of the site 100, or a number of available terminals for the site 100;
- other dynamic information related to the site 100 or to one or several of the terminals.

The site 100 may comprise several information entity 104, for example one information entity 104 for each type of environment information.

Figure 2 shows the steps of a method for executing a patch on a secure element, according to some embodiments of the invention.

The steps are performed by a terminal, such as the terminal 101.1 described above.

At a step 201, the terminal 101.1 obtains environment information (any combination of the above listed environment information). Step 201 can be performed periodically, so as to update the environment information which are dynamic information. For example, the environment information can be updated at a given frequency or every time there is a change in any environment information.

The environment information can be obtained:
- from the at least one information entity 104 directly;
- from the at least one information entity 104 via the terminal controller 103;
- from an internal sensor of the terminal 101.1. For example, the terminal 101.1 may be equipped with a camera arranged to acquire pictures representative of a queue of people waiting to use the terminal 101.1.

At a step 202, the terminal 101.1 receives a patch package. In the first and second embodiment, the patch package is the complete patch package, that can be received from the issuer 20 directly, or via the terminal controller 103. In the third embodiment, the patch package may be a partial patch package comprising only a part (one or some of the patch steps) of the complete patch, called partial patch, as explained in what follows.

At step 203, the terminal 101.1 unpacks the patch package to obtain the binary file and the manifest file.

At a step 204, the terminal 101.1 extracts the patch execution information from the manifest file. As indicated above, the extracted patch execution information may comprise:
- the at least one estimated duration associated with the execution of the (complete or partial) patch. For the first and second embodiments, in which the patch package is complete, the at least one estimated duration is the estimated patch duration associated with the execution of the complete patch. According to the third embodiment, the patch package is a partial patch package associated with one or some of the patch steps of the complete patch, the at least one estimation comprises one estimated step duration for each patch step of the partial patch;
- the number of patch steps of the patch, which can be the number of patch steps of the complete patch package (first and second embodiments) or a reduced number of patch steps of the partials patch package (third embodiment);
- the urgency level associated with the patch.

It is to be noted that step 201 and steps 202 to 204 are asynchronous and may be performed at different frequencies. Steps 202 to 204 are performed each time a new complete patch package is received from the issuer 20, while step 201 is implemented more often, because of the dynamic evolution of the environment information related to the site 100.

Optionally, according to some embodiments, the terminal 101.1 may check the signature comprised in the manifest, after step 203. The patch execution information is extracted at step 204 only if the signature comprised in the manifest is valid.

At a step 205, the terminal 101.1 determines whether a communication channel is established with a secure element. If so (if a communication channel is established with a secure element, such as the first communication channel 110.1 with the first secure element 102.1), then the method goes to step 206. Else, step 205, step 201 and/or 202 to 204 may be iterated, until a communication channel is established with a secure element.

At step 205, the terminal 101.1, upon detection that a communication channel is established with a secure element, may further determine whether the secure element is associated with the secure software manufacturer identified in the metadata of the patch. Only if the secure element is associated with the secure software manufacturer identified in the metadata of the patch, the method goes to step 206. Else, step 205, step 201 and/or 202 to 204 may be iterated, until a communication channel is established with a secure element associated with the secure software manufacturer identified in the metadata of the patch. This advantageously enables to execute patches for a variety of software manufacturers or issuers.

At a step 206, the terminal 101.1 takes a decision to execute or not the (complete or partial) patch on the secure element 102.1, based on the environment information obtained at step 201 and on the patch execution information executed at step 204. To this end, the terminal 101.1 may apply a predetermined set of at least one rule to the environment information and the patch execution information. Alternatively, the set of at least one rule is not predetermined, but may vary. The set of at least one rule is defined by at least one input parameter, among the environment information and patch execution information, and outputs a decision to execute or not the patch on the secure element 102.1. The set of at least one rule may define at least one condition that may be based on one of the input parameters and a predefined or dynamic threshold. For example, each rule may be in the form:
- if (CONDITION) then DECISION;
where CONDITION is based on a comparison between at least one input parameter and at least one threshold.

More complex rules may comprise several conditions (two or more conditions) and logic operations, such as "or", "xor", "and", for example between these several conditions.

Example of rules are given hereafter for illustrative purposes, in the context of the site 100 being an airport:
- if the number of people in the queue in front of the terminal 101.1 is more than N1, and the urgency level is less or equal than N2, do not execute the at least one patch step of the complete patch or partial patch, N1 and N2 being integers;
- if the urgency level is equal to or greater than N3, execute the at least one patch step of the complete patch or partial patch, N3 being an integer;
- if the number of people in the queue in front of the terminal 101.1 is less than N4 and the at least one estimated duration is less than N5 milliseconds, execute the at least one patch step of the complete patch or partial patch.

In the first and second embodiments, the decision consists in executing, all the patch steps of the complete patch or not executing any of the patch steps of the complete patch.

In the third embodiments, the decision consists in executing the patch step of the patch steps of the partial patch, or not executing any of the patch steps.

Also, according to some rules in the third embodiment, the terminal 101.1 may decide to execute only one or some patch steps of the partial patch received from the terminal controller 103, or not to execute any of them. For example, in the third embodiment, the at least one rule may comprise the following rule:
- if the number of people in the queue in front of the terminal 101.1 is more than N6, and if, for the first patch step of the partial patch, the estimated step duration is less than N7 second, execute said first patch step and transmit a message to the terminal controller (at step 208 described in what follows) that only the first patch step of the partial patch has been executed on the secure element 102.1.

At a step 207, the decision of step 206 is implemented:
- if the terminal 101.1 decides to execute the partial patch, one or some patch steps of the partial patch, or the complete patch, then the partial patch, the one or some patch steps of the partial patch, or the complete patch is executed;
- else, no patch step of the partial patch or complete patch is executed.

After step 207, the communication channel 110.1 between the secure element 102.1 and the terminal 101.1 is closed. It is also possible that, while a patch step of the partial patch or complete patch is executed at step 207, the communication channel 110.1 is interrupted during the execution of the patch step.

According to some embodiments, the terminal 101.1 may transmit feedback data to the terminal controller 103 at step 208, after step 207. The feedback data may:
- indicate the decision taken at step 206; and/or
- identify, if any, the at least one patch step correctly executed at step 207, or indicate if the complete patch or partial patch has been correctly executed at step 206.

According to the first embodiment, the steps of the method are carried out by the unique terminal 101.1. In the first embodiment, step 202 comprises the reception of the complete patch package forwarded by the terminal controller 103, or the reception of the complete patch package from the issuer entity 20, when the site 100 does not comprise the terminal controller 103. In the first embodiment, the terminal 101.1 decides at step 206 to execute or not the complete patch received in the complete patch package.

According to the second embodiment, steps 201 to 208 can be performed in parallel or at different instants, by several terminals 101.1-101.3 of the site 100, establishing several communication channels with different secure elements of different users. Step 202 can be performed simultaneously for the several terminals 101.1-101.3 as the terminal controller 103 transmits the complete patch package to each of them. Different decisions may be taken independently by the several terminals 101.1-101.3 at steps 206.

According to the third embodiment, preliminary steps may be performed by the terminal controller 103 before steps 201 to 208 are performed in one or several of the terminals 101.1-101.3.

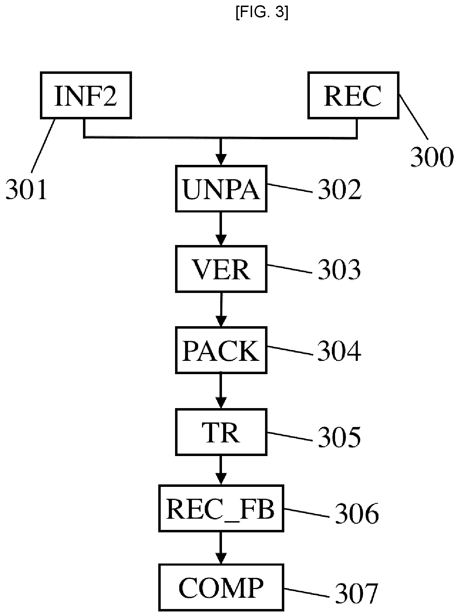

Figure 3 shows the preliminary steps of the method for executing a patch on a secure element according to the third embodiment of the invention.

As explained above, steps 300 to 305 may be implemented by the terminal controller 103 described on figure 1, on a site comprising several terminals 101.1 to 101.3, a user having to sequentially establish communication channels with each of the terminals and their secure element, to obtain a service or to access to different places of a building or of an airport.

At a step 300, the terminal controller 103 receives a complete patch package from the issuer 20.

At an optional step 301, the terminal controller 103 may obtain environment information related to the site 100, which may comprise environment information related to each of the terminals 101.1-101.3 of the site 100. The terminal controller 103 may obtain the environment information from the at least one information entity 104 and/or from the terminals 101.1-101.3.

At a step 302, the terminal controller 103 unpacks the complete patch package to obtain the binary file and the manifest file.

At an optional step 303, the terminal controller 103 may verify the signature comprised in the manifest file. The method goes to step 303 only if the verification of the signature is positive.

At a step 304, the terminal controller 103 determines a partial patch package for each of the terminals 101.1-101.3, based on the complete patch package, and optionally based on the environment information and/or on the patch execution information comprised in the manifest file. Therefore, in the example of figure 1, the terminal controller 103 determines a first patch package for the first terminal 101.1, a second patch package for the second terminal 101.2 and a third patch package for the third terminal 101.3.

The first, second and third patch packages are partial patch packages. Preferably, the first, second and third partials packages are complementary, so that a sequential execution of the first partial patch, second partial patch and third partial patch on a given secure element enables to execute the complete patch.

To generate a partial patch package, the terminal controller 103 extracts one or some of the patch steps from the manifest file, and builds a partial manifest file based on the extracted patch step or patch steps and the metadata. The partial manifest file can then be grouped with the binary file to generate the partial patch package.

For example, considering a complete patch comprising five patch steps, the first partial patch package may be obtained based on a first partial manifest file comprising the first and second patch steps, the second partial patch package may be obtained based on a second partial manifest file comprising the third patch step, and the third partial patch package may be obtained based on a third partial manifest file comprising the fourth and fifth patch steps. At a step 305, the terminal controller 103 transmits to each of the terminals 101.1-101.3, the patch package generated for this terminal at step 304. In the example of figure 1, the terminal controller 103 transmits:
- the first partial patch package to the first terminal 101.1;
- the second partial patch package to the second terminal 101.2; and
- the third partial patch package to the third terminal 101.3.

Step 305 on the terminal controller 103 side corresponds to step 202 on the terminals 101.1-101.3 side.

Upon reception of the first partial patch package, the first terminal 101.1 implements step 203 as previously detailed. The first and second patch steps can then be executed on the first secure element 102.1 by the first terminal 101.1 at a step 207 (if the first terminal 101.1 decides to execute the first partial patch package at step 206), after the first communication channel 110.1 is established between the first terminal 101.1 and the first secure element 102.1.

Upon reception of the second partial patch package, the second terminal 101.2 implements step 203 as previously detailed. The third patch step can then be executed on the first secure element 102.1 by the second terminal 101.2 at another step 207 (if the second terminal 101.2 decides to execute the second partial patch package at step 206), after a second communication channel is established between the second terminal 101.2 and the first secure element 102.1. The second communication channel is established after the first communication channel because, according to the third embodiment, the user of the first secure element 102.1 has to sequentially put their secure element 102.1 in contact with the first terminal 101.1 then with the second terminal 101.2.

Upon reception of the third partial patch package, the third terminal 101.3 implements step 203 as previously described. The fourth and fifth patch steps can then be executed on the first secure element 102.1 by the third terminal 101.3 (if the third terminal 101.3 decides to execute the third partial patch package at step 206) after a third communication channel is established between the third terminal 101.3 and the first secure element 102.1. The third communication channel is established after the first and second communication channels, because, according to the third embodiment, the user of the first secure element 102.1 has to sequentially put their secure element 102.1 in contact with the first terminal 101.1 then with the second terminal 101.2, and then with the third terminal 101.3.

Therefore, the third embodiment enables to reduce the execution time at each of the terminals: this increases the possibility for the terminals to decide to execute the partial patch at their respective steps 206, and reduces the delay at each terminal for the user of the first secure element 102.1.

According to optional steps, the terminal controller 103 may receive feedback data from at least one terminal at step 306.

In some situations, the terminal controller 103 receives:
- first feedback data from the first terminal 101.1 indicating that the first partial patch has been correctly executed. The first terminal 101.1 transmits the first feedback data to the terminal controller 103 at step 208 as previously described;
- second feedback data from the second terminal 101.2 indicating that the second partial patch has been correctly executed. The second terminal 101.2 transmits the second feedback data to the terminal controller 103 at step 208 as previously described;
- third feedback data from the third terminal 101.3 indicating that the third partial patch has been correctly executed. The third terminal 101.3 transmits the third feedback data to the terminal controller 103 at step 208 as previously described.

In these situations, the first, second and third feedback data together indicate that the complete patch has been correctly executed on the first secure element 102.1. The terminal controller 103 can then report to the issuer entity 20 that the complete patch has been correctly executed on the first secure element 102.1.

In some other situations, a terminal may indicate in its feedback data that only a part of the partial patch (one or some patch steps of the partial patch) has been correctly executed, or that none of the partial patch has been executed. For example, the first terminal 101.1 may execute only the first patch step of the partial patch (for example because the first communication channel is interrupted during the execution of the second patch step), and the first feedback data therefore indicates that only the first patch step has been correctly executed on the first secure element 102.1.

After step 306, the terminal controller 103 may transmit a complementary partial patch package to at least one of the terminals 101.1 to 101.3, for execution on a secure element on which only a part of a partial patch has been executed. In the example mentioned above, the terminal controller 103 may transmit a complementary partial patch package generated based on the second patch step, to the second terminal 101.2, so as to enables the second terminal 101.2 to execute the second patch step on the first secure element 102.1, before executing the third patch step comprised in the second partial patch package previously transmitted to the second terminal 101.2.

Figure 4 shows the structure of the terminal 101 according to some embodiments of the invention.

The terminal 101 may be any of the terminals 101.1-101.3 described in reference to figure 1.

The terminal 101 comprises a processor 401 and a memory 402.

The processor 401 may comprise one or multiple microprocessors, a Central Processing Unit (CPU), on a single Integrated Circuit (IC) or several IC chips.

No restriction is attached to the memory 402, which may be any non-transient, tangible form of memory. For example, it can comprise ROM, RAM, EEPROM and/or flash memory. The processor 401 may be programmable and may be configured to execute instructions that are stored in its internal memory or to execute instructions that are stored in the memory 402.

The memory 402 can store instructions for implementing the steps 201 to 208 described above.

The terminal 101 further comprises a first interface 403 configured to communicate with the terminal controller 103, or directly with the issuer entity 20 when the site does not comprise the terminal controller 103, in particular for receiving the patch package at step 202 as previously described.

No restriction is attached to the communication link between the terminal 101 and the terminal controller 103 (or the issuer entity 20), which may use any wired or wireless communication protocol. For example, wired protocols may include RS-232, RS-422, RS-485, I2C, SPI, IEEE 802.3 and TCP/IP. Wireless protocols may include IEEE 802.11a/b/g/n, Bluetooth, Bluetooth Low Energy (BLE), FeliCa, Zigbee, GSM, LTE, 3G, 4G, 5G, RFID and NFC. The first interface 403 may comprise hardware (an Ethernet port, a wireless radio), software (drivers, firmware application) or a combination thereof.

The terminal 101 further comprises a second interface 404 configured to communicate with a secure element by establishing a communication channel, which may be a wireless communication channel. As described above, the second interface 404 may be an NFC interface.

The terminal 101 may further comprise a third interface 405 configured to receive environment information from the information entity 104, as previously described.

No restriction is attached to the communication link between the terminal 101 and the information entity 104, which may use any wired or wireless communication protocol. For example, wired protocols may include RS-232, RS-422, RS-485, I2C, SPI, IEEE 802.3 and TCP/IP. Wireless protocols may include IEEE 802.11a/b/g/n, Bluetooth, Bluetooth Low Energy (BLE), FeliCa, Zigbee, GSM, LTE, 3G, 4G, 5G, RFID and NFC. The third interface 405 may comprise hardware (an Ethernet port, a wireless radio), software (drivers, firmware application) or a combination thereof.

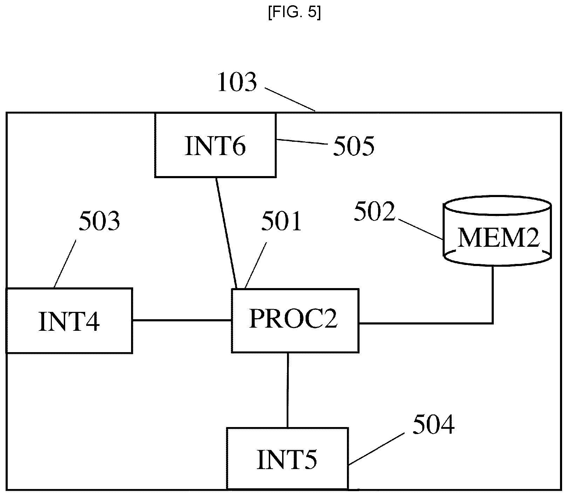

Figure 5 shows the structure of the terminal controller 103 according to the third embodiment of the invention.

The terminal controller 103 comprises a processor 501 and a memory 502.

The processor 501 may comprise one or multiple microprocessors, a Central Processing Unit (CPU), on a single Integrated Circuit (IC) or several IC chips.

No restriction is attached to the memory 502, which may be any non-transient, tangible form of memory. For example, it can comprise ROM, RAM, EEPROM and/or flash memory. The processor 501 may be programmable and may be configured to execute instructions that are stored in its internal memory or to execute instructions that are stored in the memory 502.

The memory 502 can store instructions for implementing the steps 300 to 307 described above.

The terminal controller 103 further comprises a fourth interface 503 configured to communicate with the issuer entity 20, in particular for receiving the complete patch package at step 300. The fourth interface 503 can be a network interface, such as an IP interface for communicating with the issuer entity 20 via an extended IP network.

The terminal controller 103 further comprises a fifth interface 504 configured to communicate with the terminals 101.1-101.3 of the site 100.

No restriction is attached to the communication link between the terminals 101.1-101.3 and the terminal controller 103, which may use any wired or wireless communication protocol. For example, wired protocols may include RS-232, RS-422, RS-485, I2C, SPI, IEEE 802.3 and TCP/IP. Wireless protocols may include IEEE 802.11a/b/g/n, Bluetooth, Bluetooth Low Energy (BLE), FeliCa, Zigbee, GSM, LTE, 3G, 4G, 5G, RFID and NFC. The fifth interface 504 may comprise hardware (an Ethernet port, a wireless radio), software (drivers, firmware application) or a combination thereof.

The terminal controller 103 may further comprise a sixth interface 505 configured to communicate with the information entity 104 previously described.

No restriction is attached to the communication link between the terminal controller 103 and the information entity 104, which may use any wired or wireless communication protocol. For example, wired protocols may include RS-232, RS-422, RS-485, I2C, SPI, IEEE 802.3 and TCP/IP. Wireless protocols may include IEEE 802.11a/b/g/n, Bluetooth, Bluetooth Low Energy (BLE), FeliCa, Zigbee, GSM, LTE, 3G, 4G, 5G, RFID and NFC. The sixth interface 505 may comprise hardware (an Ethernet port, a wireless radio), software (drivers, firmware application) or a combination thereof.

The embodiments are described in sufficient detail to enable those of ordinary skill in the art to embody and implement the systems and processes herein described. It is important to understand that embodiments can be provided in many alternate forms and should not be construed as limited to the examples set forth herein.

## Claims

1. A method of executing a patch on a secure element (102.1; 102.2), the method being implemented by at least one terminal (101.1-101.3) on a site (100) and comprising the following operations:
- obtaining (202) a patch package comprising a patch and patch execution information;
- obtaining (201) environment information related to the site;
- after establishing (205) a communication channel (110.1;110.2) with the secure element, taking a decision (206) to execute or not the patch comprised in the patch package, on the secure element, the decision depending on the environment information and the patch execution information;
- executing (207) the patch on the secure element if the decision indicates to execute the patch.

2. The method according to claim 1, wherein the decision is taken (206) by applying at least one predefined rule, with at least one predefined condition defining input parameters including environment information and patch execution information, and defining an output decision based on the input parameters, the output decision indicating the execute or not the patch.

3. The method according to claim 1 or 2, wherein the environment information comprises one or several of the following information:
- information related to a queue of people waiting to use the terminal (101.1-101.3);
- information regarding time schedule related to the site (100); and
- information regarding availability of other terminals of the site.

4. The method according to one of claims 1 to 3, wherein the patch execution information comprises one or several of the following information:
- a number of patch steps to be executed to execute the patch;
- at least one estimated duration associated with an execution of the patch; and
- an urgency level associated with the execution of the patch.

5. The method according to claim 4, wherein the at least one estimated duration comprises an estimated patch duration associated with the execution of the complete version of the patch and/or at least one estimated step duration respectively associated with execution of at least one patch step, the complete version of the patch comprising several patch steps.

6. The method according to one of the preceding claims, wherein the patch package comprises a first file and a second file, the first file comprising binary data of the patch and the second file comprising at least the patch execution information.

7. The method according to claim 6, wherein the second file comprises a metadata section and a patch step section.

8. The method according to claims 5 and 7, wherein the metadata section comprises the estimated patch duration and/or the urgency level.

9. The method according to claim 7 or 8, wherein the metadata section comprises a signature of an issuer of the patch or of a manufacturer of the patch.

10. The method according to the preceding claims, wherein the obtained patch package based on which the decision is taken (206) is a complete patch package comprising a complete patch, wherein the complete patch package is obtained from an issuer of the patch package and wherein the terminal (101.1) is a unique terminal of the site (100).

11. The method according to one of claims 1 to 9, wherein the site comprises several terminals, wherein a terminal controller of the site receives a complete patch package from an issuer entity, the complete patch package comprising a complete patch, and transmits the complete patch package to the terminals (101.1-101.3) of the site (100), and wherein, for each of the terminals, the complete patch package is the obtained pack package based on which the decision is taken (206).

12. The method according to one of claims 1 to 9, wherein the site (100) comprises several terminals (101.1-101.3), wherein a terminal controller (103) of the site (100) performs the following operations:
- receiving (300) a complete patch package from an issuer of the patch, comprising a complete patch associated with a plurality of patch steps;
- generating (304) at least two partial patch packages comprising a first partial patch package and a second partial patch package, the first partial patch package indicating at least one first patch step of the complete patch, and the second partial patch package indicating at least one second patch step of the complete patch, the at least one second patch step being distinct from the at least one first patch step, wherein the at least two partial patch packages are complementary, so that upon sequential execution of the patch steps of the at least two partial patch packages, the complete patch is executed;
- transmitting (305), to each terminal (101.1-101.3) of the site, the partial patch package generated for said terminal;
wherein, for each terminal of the site, the obtained patch package based on which the decision is taken (206) is the partial patch package received from the terminal controller.

13. The method according to claim 12, wherein the terminal controller (103) receives the environment information related to the site (100), extracts (302) the patch execution information from the complete patch package, and generates (304) the at least two partial patch packages based on the received environment information and the patch execution information.

14. A terminal (101.1; 101.3) comprising a first interface (403) configured for obtaining a patch package comprising a patch and patch execution information;
the terminal being configured for obtaining environment information related to a site (100) in which the terminal is located;
the terminal comprising a second interface (404) for establishing a communication channel (110.1) with a secure element (102.1; 102.2), and a processor (401) configured for
- after establishing the communication channel with the secure element, taking a decision to execute or not the patch comprised in the patch package, on the secure element, the decision depending on the environment information and on the patch execution information;
- executing the patch on the secure element, via the second interface, if the decision indicates to execute the patch.

15. A system (10) comprising at least one terminal (101.1-101.3) according to claim 14, and a terminal controller (103), wherein the terminal controller is configured for receiving a complete patch package and to transmit the complete patch package or a partial patch package derived from the complete patch package, to the at least one terminal;
wherein, for each terminal among the at least one terminal, the obtained patch package is the complete patch package or partial patch package received from the terminal controller.
